(19) Europäisches Patentamt
European Patent Office
Office européen des brevets

(11) EP 3 034 537 B1

(12) EUROPÄISCHE PATENTSCHRIFT

(45) Veröffentlichungstag und Bekanntmachung des Hinweises auf die Patenterteilung:
**26.02.2020 Patentblatt 2020/09**

(51) Int Cl.:
***C08G 65/10*** *(2006.01)* ***C08G 63/82*** *(2006.01)*
***C08G 65/26*** *(2006.01)* ***C08G 77/08*** *(2006.01)*

(21) Anmeldenummer: **14198120.9**

(22) Anmeldetag: **16.12.2014**

(54) **VERFAHREN ZUR ORGANOKATALYTISCHEN RINGÖFFNENDEN POLYMERISATION**

Method for organocatalytic ring-opening polymerisation

Procédé de polymérisation organocatalytique à anneau ouvert

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016 Patentblatt 2016/25**

(73) Patentinhaber: **BASF SE**
**67056 Ludwigshafen am Rhein (DE)**

(72) Erfinder:
- **Dr. Thielbeer, Frank**
  **68161 Mannheim (DE)**
- **Dr. Zarbakhsh, Sirus**
  **67117 Limburgerhof (DE)**
- **Dr. Deglmann, Peter**
  **68163 Mannheim (DE)**
- **Dr. Große-Willerich, Julia**
  **67117 Limburgerhof (DE)**

(74) Vertreter: **BASF IP Association**
**BASF SE**
**G-FLP-C006**
**67056 Ludwigshafen (DE)**

(56) Entgegenhaltungen:
**EP-A1- 2 644 635** **EP-A1- 2 765 151**
**US-A1- 2013 253 164**

- **JEAN RAYNAUD ET AL: "N-Heterocyclic Carbene-Induced Zwitterionic Ring-Opening Polymerization of Ethylene Oxide and Direct Synthesis of [alpha],[omega]-Difunctionalized Poly(ethylene oxide)s and Poly(ethylene oxide)-b -poly([epsilon]-caprolactone) Block Copolymers", JOURNAL OF THE AMERICAN CHEMICAL SOCIETY, Bd. 131, Nr. 9, 11. März 2009 (2009-03-11) , Seiten 3201-3209, XP55032446, ISSN: 0002-7863, DOI: 10.1021/ja809246f**
- **DOVE A P ET AL: "N-Heterocyclic carbenes: Effective organic catalysts for living polymerization", POLYMER, ELSEVIER SCIENCE PUBLISHERS B.V, GB, Bd. 47, Nr. 11, 17. Mai 2006 (2006-05-17), Seiten 4018-4025, XP028061046, ISSN: 0032-3861, DOI: 10.1016/J.POLYMER.2006.02.037 [gefunden am 2006-05-17]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 034 537 B1

## Beschreibung

Die vorliegende Erfindung betrifft ein Verfahren zur organokatalytischen ringöffnenden Polymerisation mindestens eines zur ringöffnenden Polymerisation geeigneten Monomers M, insbesondere zur Herstellung von Polyetherpolyolen.

N-Heterocyclische Carbene (NHC) sind seit einigen Jahren als Initiatoren bzw. Organokatalysatoren für die ringöffnende Polymerisation bekannt (Dove et al., Polymer 47 (2006), 4018). Die Anwendung auf die katalytische Polymerisation von Ethylenoxid (EO) wurde zuerst im Jahr 2006 beschrieben (ACS Polymer Preprints, 47 (2006), 99). Kürzlich wurde auch von Raynaud et al. (JACS, 131 (2009), 3201; WO2009/013344 zusammen mit Rhodia) die stöchiometrische Ringöffnung von Ethylenoxid (EO) in Lösung beschrieben, wobei nach langen Reaktionszeiten zwitterionische PEG (Polyethylenglykol)-Oligomere entstehen. Im Patent werden dabei als Monomere alle technisch relevanten Alkylenoxide sowie als Katalysatoren alle gängigen Carbenstrukturen beansprucht, Beispiele aber nur für EO gegeben (und somit mögliche Vorteile der NHC-Katalysatoren für Propylenoxid (PO) nicht genannt). Zuletzt wurde von der gleichen Arbeitsgruppe im Jahr 2010 auch ein Paper zur PO Polymerisation mit monofunktionellen Startern bei ähnlichen Reaktionsbedingungen publiziert (Chem. Commun., 46 (2010), 3203), wobei aber außer der Metallfreiheit der Reaktion keine Vorteile ersichtlich sind. In allen diesen Arbeiten wird keine Anwendung für die Herstellung von Polyurethan (PU) beansprucht bzw. als besonders vorteilhaft dargestellt.

In der Patentanmeldung WO 2011/141492 wird die lineare ringöffnende Polymerisation von Alkylenoxiden mit NHC-Katalysatoren zur Herstellung von Polyether- und Polyesterolen ausgehend von di- und höherfunktionellen Startern beschrieben. Als Vorteile dieser Erfindung werden vor allem die hohen Polymerisationsgrade mit PO (>5 PO pro OH-Gruppe des Starters im Gegensatz zu konventionellen Organokatalysatoren) und die Möglichkeit eines EO-Endcapping von PPG (Polypropylenglykol)-cores genannt. Konventionelle Katalysatoren führen entweder zu erheblichen monofunktionellen Nebenprodukten (KOH-Katalyse) oder erlauben keinen wohldefinierten Endcap auf der Mehrheit der sekundären Hydroxygruppen (bei Doppelmetallcyanid (DMC)-Katalyse).

Typische organokatalytische Verfahren mit NHCs beruhen auf deren Nucleophilie bzw. Basizität. Eine entscheidende Hürde für den großtechnischen Einsatz von NHCs stellen aber genau diese Eigenschaften dar: Freie NHCs sind typischerweise hydrolyse- und oxidationsempfindlich (J. Organomet. Chem., 617 (2001), 242). Im Prozess bietet sich daher an, die aktiven NHC-Spezies aus Präkatalysatoren in situ freizusetzen.

Eine Lösung dafür bieten beispielsweise Addukte der NHCs mit z. B. Alkoholen, Chloroform, $CS_2$, $CO_2$. Die Verwendung der NHC-Addukte ist hierbei allerdings problematisch wegen des hohen synthetischen Aufwands, der nötig ist, um diese Addukte herzustellen.

Eine weitere Möglichkeit ist die Deprotonierung von Dialkylimidazoliumsalzen (bzw. Imidazolinium-, Thiazolium, ...), schematisch wie folgt darstellbar:

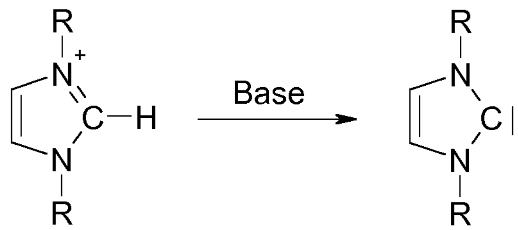


Um diese Deprotonierung zu bewerkstelligen, sind wiederum nach dem Stand der Technik recht starke Basen nötig, z. B. besonders starke Organobasen wie Phosphazene (teuer) oder Alkalitertiärbutanolate (keine Metallfreiheit mehr). Der Einsatz derartiger (Metallsalz-) Basen macht eine Aufarbeitung des Produkts erforderlich.

Es ist auch bekannt, dass die o. g. Dialkylimidazoliumsalze bei thermischer Belastung basische bzw. nukleophile Intermediate freisetzen, weswegen sie als latente Initiatoren zur Epoxidhärtung interessant sind: Für Imidazoliumiodide wurde bereits 1983 beschrieben (J. Polym. Sci.: Polym. Lett., 21 (1983), 633), dass bei 200 °C eine Härtung von DEGBA (Diglycidylether von Bisphenol A) basierten Epoxy-Systemen initiiert werden kann. Es wird davon ausgegangen, dass ein intermediäres neutrales (Alkyl-)Imidazol, also eine in der Epoxid-Härtung weit verbreitete Klasse von Härtern, entsteht. In einer Patentanmeldung der BASF von 2008 (WO 2008/152003 A1) wird für die analogen Imidazoliumacetate eine ähnliche katalytische Wirkung in der latenten Epoxidhärtung beansprucht. Die Härtung von Epoxid-Harzen unterscheidet sich jedoch von der linearen ringöffnenden Polymerisation dadurch, dass die Epoxid-Monomere zwei- oder höherfunktionell sind und demnach quervernetzte Produkte entstehen, während in der linearer ringöffnenden Polymerisation unverzweigte Ketten, ggf. auf höherfunktionellen Startern, angestrebt werden, wobei die Produkte somit nach wie vor diskrete Moleküle (und Mischungen solcher) darstellen, die z.B. durch Molekulargewicht(sverteilung) und OH-Zahl definiert sind. In den gehärteten, quervernetzten Epoxid-Harzsystemen ist darüber hinaus die vollständige Abreaktion aller

Epoxidgruppen von minderer Bedeutung, während bei der linearen ringöffnenden Polymerisation jedoch möglichst vollständiger Umsatz der monofunktionellen Monomere angestrebt wird. Desweiteren unterscheiden sich die in Epoxid-Harzsystemen gängisten Epoxyverbindungen (z.B. DGEBA und andere Glycidylether, wie in WO2008/152003A1 beschrieben) von den klassischen Alkylenoxiden Ethylenoxid, Propylenoxid und Butylenoxid für lineare Alkoxilierungsreaktionen durch den Substituenten an der Epoxidfunktionalität in punkto sterischer Anspreuch und Polarität, was einen starken Einfluss auf die Reaktivität der Monomere und propagierenden Spezies erwarten lässt. Dementsprechend kann nicht davon ausgegangen werden, dass generell die für die Epoxid-Härtung geeigneten Katalysatoren ebenfalls für effiziente lineare ringöffnende Polymerisationen geeignet sind.

Erwartungsgemäß ergaben auch interne Versuche mit N-Alkylimidazolen als Organokatalysatoren für die Propoxilierung von Alkohol-Startern , dass die Reaktivität dieser Katalysatoren nicht gut zur Herstellung von höhermolekularen Produkten (OH-Zahl unter 150 mg KOH/ g) mittels linearer ringöffnender Polymerisation in der Praxis geeignet ist, da im OH-Zahl-Bereich unter 150 mg KOH/ g die geringe katalytische Aktivität der Alkylimidazol-Spezies zu sehr langen Zykluszeiten führt.

Die Nutzung von organischen Ringöffnungskatalysatoren dient, wie erwähnt, der Substitution der gegenwärtigen Katalysatoren wegen der verbesserten Herstellung und Produkteigenschaften. Die meist verwendeten Katalysatoren sind Alkali- und Erdalkalihydroxide. Diese haben aber den Nachteil, dass die Hydroxide nach der Reaktion neutralisiert und abgefiltert werden müssen, da sie die Polyurethanpolymerisation stören. Weiterhin werden N-nucleophile Aminkatalysatoren genutzt welche den Nachteil haben, dass nur niedermolekulare Propylenoxidpolymerisate zugänglich sind. Es ist also nicht möglich Blockcopolymere aus einem Propylenoxid-Kernblock mit einem Ethylenoxid Endblock herzustellen. Außerdem existieren Doppelmetallcyanid (DMC) Katalysatoren; mit diesen lassen sich aber auch keine Ethylenoxidendblöcke an einen Propylenoxidblock anfügen. Daher war und ist es nötig, neuartige organische Katalysatoren für die Herstellung zu etablieren.

In EP 2 644 635 wurden bereits aus Imidazoliumsalzen durch thermische Aktivierung N-heterocyclische Carbene freigesetzt, die als organische Ringöffnungskatalysatoren für die Alkoxylierung bekannt sind. In EP 2 644 635 wurde die organische ringöffnende Polymerisation durch thermische Aktivierung bei 140 - 250 °C, bevorzugt bei 140 - 180 °C, besonders bevorzugt bei 150 - 170 °C offenbart, wobei die Aktivierung in einem Zeitraum von mindestens 30 s, bevorzugt 5 - 30 min, besonders bevorzugt 10 - 25 min unter Vakuum durchzuführen sei.

Das in EP 2 644 635 beschrieben Verfahren liefert jedoch noch keine optimalen Ausbeuten und auch nicht immer die gewünschten OH-Zahlen im Produkt. Daher wurden nun die Aktivierungsbedingungen und deren Einfluss auf das Endergebnis der Gesamtreaktion eingehender untersucht.

Es stellt sich also die Aufgabe, ein Verfahren zur organokatalytischen ringöffnenden Polymerisation mindestens eines zur ringöffnenden Polymerisation geeigneten Monomers M, insbesondere von Alkylenoxiden, bereitzustellen, welches verbesserte Ausbeuten und niedrigere OH-Zahlen liefert. Es sollte möglichst auch eine verbesserte Katalysatoreffizienz erreicht werden. Diese Aufgabe konnte nun überraschenderweise durch das in den Ansprüchen definierte Verfahren gelöst werden.

Es hat sich nämlich überraschenderweise herausgestellt, dass eine Aktivierungstemperatur von 135-145°C Polymerisationsprodukte mit höheren Ausbeuten und niedrigeren OH-Zahlen erzeugt als niedrigere (120 °C) bzw. höhere (160 °C) Aktivierungstemperaturen. Außerdem wurde überaschenderweise festgestellt, dass eine höhere Ausbeute bei einer längeren Aktivierungszeit, z. B. ab einer Aktivierungszeit von 50 minuten bis 100 erreicht wird. Dagegen sinkt die Ausbeute bei kürzeren Aktivierungszeiten. Außerdem wurde festgestellt, dass die OH-Zahl ansteigt bei Aktivierungszeiten länger als 1 h, aber sinkt bei Aktivierungszeiten kürzer als 1 h.

Der Gegenstand dieser Erfindung ist somit ein Verfahren zur organokatalytischen ringöffnenden Polymerisation mindestens eines zur ringöffnenden Polymerisation geeigneten Monomers M ausgewählt aus der Gruppe enthaltend Alkylenoxide, ausgewählt aus der Gruppe bestehend aus Ethylenoxid, Propylenoxid und Butylenoxid und Mischungen daraus, sowie cyclische Lactone, Lactide, cyclische Siloxane, oder von Mischungen daraus, wobei in einem Schritt (i) mindestens eine N-heterocyclische Verbindung der Formel (I)

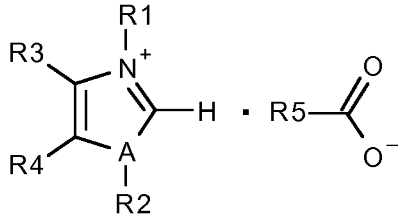

,

wobei A ausgewählt ist aus der Gruppe bestehend aus N, O und S, bevorzugt N - wobei kein Rest R2 vorliegt, wenn A gleich O oder S ist -, und wobei R1 und R2 jeweils unabhängig voneinander ausgewählt sind aus Alkyl und Aryl, und

wobei R3, R4 und R5 jeweils unabhängig voneinander ausgewählt sind aus H, Alkyl, Aryl, und wobei auch Ringschlüsse zwischen R1 und R3, R3 und R4 sowie R4 und R2 möglich sind, in Gegenwart mindestens einer Zerewitinoff-aktiven Verbindung Z1, bevorzugt unter Vakuum, einer Temperatur im Bereich von 130 °C bis 150 °C, bevorzugt 135 °C bis 145 °C, besonders bevorzugt 137 °C bis 143 °C, für eine Dauer von bevorzugt mindestens 55 Minuten ausgesetzt wird, und in einem Schritt (ii) das Monomer M zugegeben und, optional in Gegenwart einer Zerewitinoff-aktiven Verbindung Z2, zur Reaktion gebracht wird, wobei der Schritt (i) zwischen 50 Minuten und 100 Minuten dauert.

Im Sinne dieser Erfindung bedeutet "Polymerisation" insbesondere die Reaktion mindestens dreier Wiederholungseinheiten; jedoch sind auch kürzere Oligomere umfasst.

Eine "Zerewitinoff-aktive Verbindung" bezieht sich auf Verbindungen, die acide genug sind, um gängige Grignard-Verbindungen zum Kohlenwasserstoff zu protonieren. Beispiele für "Zerewitinoff-aktive Vebindungen" sind Alkohole und Amine.

Eine Vielzahl an Verbindungen mit der Formel (I) ist käuflich erhältlich, z. B. die ionischen Flüssigkeiten Basionics™ von BASF SE.

In einer Ausführungsform des erfindungsgemäßen Verfahrens sind R1 und R2 jeweils primäre Alkylgruppen.

In einer anderen Ausführungsform des erfindungsgemäßen Verfahrens ist R1 eine primäre und R2 eine sekundäre Alkylgruppe.

In einer anderen Ausführungsform des erfindungsgemäßen Verfahrens sind R1 und R2 jeweils sekundäre Alkylgruppen.

In einer Ausführungsform des erfindungsgemäßen Verfahrens ist das Anion in der Formel (I) ausgewählt aus der Gruppe enthaltend Formiat, Acetat und Propionat, bevorzugt Acetat.

In einer weiteren Ausführungsform des erfindungsgemäßen Verfahrens ist das Anion in der Formel (I) ausgewählt aus der Gruppe enthaltend Benzoat, Phthalat, Terephthalat und Isophthalat.

In einer weiteren Ausführungsform des erfindungsgemäßen Verfahrens ist das Anion in der Formel (I) ausgewählt aus der Gruppe enthaltend Salze aliphatischer Dicarbonsäuren, wie z. B. Succinat oder Glutarat.

In einer bevorzugten Ausführungsform des erfindungsgemäßen Verfahrens stellt die Formel (I) Dipropylimidazolium-Acetat dar.

In einer Ausführungsform des erfindungsgemäßen Verfahrens wird Schritt (ii) erst nach Ende des Schritts (i) durchgeführt.

In einer Ausführungsform des erfindungsgemäßen Verfahrens beginnt Schritt (ii) bereits während der Dauer des Schritts (i), wobei in diesem Fall im Schritt (i) kein Vakuum angelegt wird.

In einer Ausführungsform des erfindungsgemäßen Verfahrens ist mindestens eine Zerewitinoff-aktive Verbindung Z1 ausgewählt aus der Gruppe bestehend aus Alkoholen.

In einer weiteren Ausführungsform des erfindungsgemäßen Verfahrens ist mindestens eine Zerewitinoff-aktive Verbindung Z1 ausgewählt aus der Gruppe bestehend aus Aminen.

In einer weiteren Ausführungsform des erfindungsgemäßen Verfahrens werden mindestens zwei Zerewitinoff-aktive Verbindungen Z1 verwendet, wobei mindestens eine Zerewitinoff-aktive Verbindung Z1a ausgewählt ist aus der Gruppe bestehend aus Alkoholen, und mindestens eine Zerewitinoff-aktive Verbindung Z1b ausgewählt ist aus der Gruppe bestehend aus Aminen.

In einer weiteren Ausführungsform des erfindungsgemäßen Verfahrens ist mindestens eine Zerewitinoff-aktive Verbindung Z2 ausgewählt aus der Gruppe bestehend aus Alkoholen und Aminen, bevorzugt Alkoholen, und Mischungen daraus.

Die mindestens eine Zerewitinoff-aktive Verbindung Z1 ist bevorzugt ausgewählt aus der Gruppe bestehend aus Alkoholen, besonders bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, $C_1$- bis $C_{18}$-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

Ebenfalls bevorzugt ist mindestens eine Zerewitinoff-aktive Verbindung Z1 ausgewählt aus der Gruppe bestehend aus Aminen, insbesondere primären und sekundären aliphatischen und aromatischen Aminen oder Mischungen daraus, ganz besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

Die Zerewitinoff-aktive Verbindung Z1 kann auch mehrere Aminogruppen und/oder andere Zerewitinoff-aktive Gruppen, wie beispielsweise OH-Gruppen, enthalten.

In einer Ausführungsform des erfindungsgemäßen Verfahrens ist die Verbindung Z1 gleich der Verbindung Z2.

In einer anderen Ausführungsform des erfindungsgemäßen Verfahrens entspricht die Verbindung Z1 nicht der

Verbindung Z2.

In einer bevorzugten Ausführungsform des erfindungsgemäßen Verfahrens wird im Schritt (i) keine Base mit einem $pK_b$ ($H_2O$) kleiner 1 verwendet.

Das mindestens eine zur ringöffnenden Polymerisation geeignete Monomer M kann ausgewählt sein aus der Gruppe enthaltend Alkylenoxide, cyclische Lactone, Lactide, cyclische Siloxane, und Mischungen daraus, bevorzugt Mischungen enthaltend Alkylenoxide, besonders bevorzugt Alkylenoxide.

Die Alkylenoxide für das erfindungsgemäße Verfahren sind bevorzugt ausgewählt aus der Gruppe umfassend:

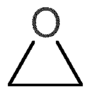 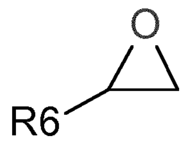 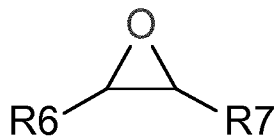 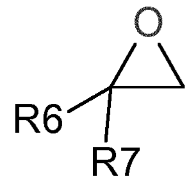

Dabei gilt: R6 und R7 sind jeweils ausgewählt aus der Gruppe umfassend Alkyl, Aryl, Alkenyl. Hierbei bedeutet Alkyl bevorzugt einen Rest ausgewählt aus der Gruppe der C1- bis C10-Alkyl-verbindungen, bevorzugt C1- bis C2-Verbindungen, besonders bevorzugt C1-Verbindungen. Aryl bedeutet bevorzugt einen Phenyl-Rest.

Alkenyl bedeutet bevorzugt einen Rest ausgewählt aus der Gruppe der C2- bis C10-Alkyenlyverbindungen, bevorzugt eine C3-Alkenylverbindung.

In einer bevorzugten Ausführungsform der Erfindung ist das Alkylenoxid ausgewählt aus der Gruppe enthaltend Ethylenoxid (EO), Propylenoxid (PO) und Butylenoxid. In einer besonders bevorzugten Ausführungsform der Erfindung werden Mischungen enthaltend Propylenoxid verwendet. In weiteren bevorzugten Ausführungsform wird als Monomer M ausschließlich Propylenoxid verwendet.

In einer Ausführungsform des erfindungsgemäßen Verfahrens werden die Monomeren M bzw. deren Gehalt während der Reaktion variiert. Daher erlaubt das erfindungsgemäße Verfahren auch die Aufbringung eines Ethylenoxid (EO)-Endcaps.

Auch die Copolymerisation, zum Beispiel mit Lactonen, Lactid und/oder cyclischen Siloxanen, ist mit dem erfindungsgemäßen Verfahren möglich.

Beispiele geeigneter Lactone für die Copolymerisation mit Alkylenoxiden sind substitutuierte oder unsubstituierte Lactone mit 4-gliedrigen oder größeren Ringen, wie beispielsweise β-Propiolacton, δ-Valerolacton, ε-Caprolacton, Methyl-ε-caprolacton, β,β-Dimethyl-β-propiolacton, β-Methyl-β-propiolacton, α-Methyl-β-propiolacton, α,α-Bis(chlormethyl)-propiolacton, Methyoxy-ε-caprolacton, Ethoxy-ε-caprolacton, Cyclohexyl-ε-caprolacton, Phenyl-ε-caprolacton, Benzyl-ε-caprolacton, ζ-Enantholacton, η-Caprylolacton, α,β,γ-Trimethoxy-δ-valerolacton, oder β-Butyrolactone, und Mischungen daraus. In einer Ausführungsform wird ε-Caprolacton verwendet.

Die Temperatür liegt im Schritt (i) des erfindungsgemäßen Verfahrens im Bereich von 135 °C bis 145 °C, besonders bevorzugt 137 °C bis 143 °C.

Hierbei dauert der Schritt (i) zwischen 50 Minuten bis 100 Minuten, ganz besonders bevorzugt 55 Minuten bis 70 Minuten.

In einer Ausführungsform des erfindungsgemäßen Verfahrens wird im Schritt (i) Vakuum angelegt.

Der Schritt (i) wird in einer Ausführungsform des erfindungsgemäßen Verfahrens in einer Apparatur durchgeführt, die ausgewählt ist aus der Gruppe bestehend aus Rührkesselreaktor, Rohrreaktor, Rohrbündel-Wärmetauscher, Wärmetauscher (wie z. B. Platten-Wärmetauscher), Dünnschichtverdampfer (auch Fallfilmverdampfer genannt), Strippingkolonne, Flasher und Kombinationen dieser Apparaturen. Gegebenenfalls kann sich die Dauer von Schritt (i) durch diese Apparaturen reduzieren. Bei Verwendung eines Rohrreaktors und/oder RohrbündelWärmetauschers wird im Schritt (i) bevorzugt kein Vakuum angelegt.

In einer bevorzugten Ausführungsform des erfindungsgemäßen Verfahrens ist das mindestens eine zur ringöffnenden Polymerisation geeignete Monomer M ausgewählt aus der Gruppe enthaltend Alkylenoxide und Mischungen daraus, wobei die Temperatur während der Umsetzung mit dem mindestens einen Monomer M im Schritt (ii) nach Ende des Schritts (i) im Bereich von 80 °C bis 130 °C, bevorzugt im Bereich von 90 °C bis 120 °C, besonders bevorzugt 100 bis 110 °C liegt.

In einer weiteren bevorzugten Ausführungsform des erfindungsgemäßen Verfahrens ist das Monomer M ausgewählt aus der Gruppe bestehend aus Ethylenoxid, Propylenoxid, Butylenoxid und Mischungen daraus, bevorzugt Mischungen enthaltend Propylenoxid, und die Zerewitinoff-aktive Verbindung Z1 ist ausgewählt aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, $C_1$- bis $C_{18}$-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, oder Melamin, sowie Mischungen aus mindestens zwei der aufgeführten Verbindungen, und die Zerewitinoff-aktive Verbindung Z2 ist ausgewählt aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, $C_1$- bis $C_{18}$-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, oder Melamin, sowie Mischungen aus mindestens zwei der aufgeführten Verbindungen, und die Temperatur im Schritt (i) liegt im Bereich von 135 °C bis 145 °C für eine Dauer von 50 bis 100 Minuten, und die Temperatur im Schritt (ii) nach Ende des Schritts (i) liegt im Bereich von 80 °C bis 130 °C, bevorzugt im Bereich von 90 °C bis 120 °C, besonders bevorzugt 100 bis 110 °C.

Ein weiterer Gegenstand der vorliegenden Erfindung ist auch ein Polymerisations-Produkt, herstellbar nach dem erfindungsgemäßen Verfahren, sowie die Verwendung eines nach dem erfindungsgemäßen Verfahren herstellbaren Polymerisations-Produkts zur Herstellung von Polyurethanen.

Im Folgenden werden einige Angaben zu den üblicherweise verwendeten Apparaturen sowie den Leistungseinträgen durch Rührer u./ o. Pumpe beschrieben.

Üblicherweise liegt in dem erfindungsgemäßen Verfahren zur organokatalytischen ringöffnenden Polymerisation der Leistungseintrag durch mindestens einen Rührer und/oder durch mindestens eine Pumpe, bezogen auf das Reaktorvolumen, im Bereich von 0,001 bis 8,2 kW/$m^3$.

Es kann dabei auch mindestens ein Strömungsbrecher verwendet werden.

In einer Ausführungsform des erfindungsgemäßen Verfahrens zur organokatalytischen ringöffnenden Polymerisation wird kein Strömungsbrecher und keine Pumpe verwendet, wobei der Leistungseintrag durch mindestens einen Rührer, bezogen auf das Reaktorvolumen, im Bereich von 0,36 bis 7,2 kW/$m^3$ liegt, bevorzugt von 1,2 bis 4,8 kW/$m^3$, besonders bevorzugt von 1,44 bis 4,2 kW/$m^3$.

In einer weiteren Ausführungsform des erfindungsgemäßen Verfahrens zur organokatalytischen ringöffnenden Polymerisation wird mindestens ein Strömungsbrecher und keine Pumpe verwendet, wobei der Leistungseintrag durch mindestens einen Rührer, bezogen auf das Reaktorvolumen, im Bereich von 0,3 bis 6 kW/$m^3$ liegt, bevorzugt von 1 bis 4 kW/$m^3$, besonders bevorzugt von 1,2 bis 3,5 kW/$m^3$.

In einer weiteren Ausführungsform des erfindungsgemäßen Verfahrens zur organokatalytischen ringöffnenden Polymerisation wird kein Rührer verwendet wird, wobei der Leistungseintrag durch mindestens eine Pumpe, bezogen auf das Reaktorvolumen, im Bereich von 0,001 bis 1 kW/$m^3$ liegt, bevorzugt von 0,002 bis 0,5 kW/$m^3$, besonders bevorzugt von 0,003 bis 0,25 kW/$m^3$.

In einer weiteren Ausführungsform des erfindungsgemäßen Verfahrens zur organokatalytischen ringöffnenden Polymerisation wird kein Strömungsbrecher verwendet, wobei der kombinierte Leistungseintrag durch mindestens einen Rührer und mindestens eine Pumpe, bezogen auf das Reaktorvolumen, im Bereich von 0,361 bis 8,2 kW/$m^3$ liegt, bevorzugt von 1,2002 bis 5,3 kW/$m^3$, besonders bevorzugt von 1,443 bis 4,45 kW/$m^3$.

In einer weiteren Ausführungsform des erfindungsgemäßen Verfahrens zur organokatalytischen ringöffnenden Polymerisation wird mindestens ein Strömungsbrecher verwendet, wobei der kombinierte Leistungseintrag durch mindestens einen Rührer und mindestens eine Pumpe, bezogen auf das Reaktorvolumen, im Bereich von 0,3001 bis 7 kW/$m^3$ liegt, bevorzugt von 1,002 bis 4,5 kW/$m^3$, besonders bevorzugt von 1,203 bis 3,75 kW/$m^3$.

Für das erfindungsgemäße Verfahren zur organokatalytischen ringöffnenden Polymerisation geeignete Apparaturen:

Angaben hierzu finden sich z.B. in M. Ionescu, Chemistry and Technology of Polyols for Polyurethanes, Rapra Technology Limited, Shawbury/UK, 2005, S. 336 ff., sowie in M. Baerns, A. Behr, A. Brehm, J. Gmehling, H. Hofmann, U. Onken, Ullmann's Encyclopedia of Industrial Chemistry, New York, 5th ed., Vol. A21, S. 665.

Beispielsweise kann das erfindungsgemäße Verfahren in einem Rührkessel durchgeführt werden, wobei der Rührkessel mit mindestens einem innen liegenden und/oder mit mindestens einem außen liegenden Wärmetauscher ausgerüstet sein kann.

Leistungseintrag:

Der spezifische Leistungseintrag, in kW/$m^3$, bezogen auf das Reaktorvolumen, errechnet sich in Abhängigkeit von Rührertyp, Rührerabmessungen, Reaktorabmessungen, Viskosität der Reaktionsmasse und Drehzahl in Anwesenheit von Strömungsbrechern nach M. Zlokarnik, Rührtechnik, Theorie und Praxis, Springer Verlag Berlin 1999, zu:

$$P = Ne * n^3 * d^5 * \rho / V \qquad \text{(Formel 1)},$$

wobei Ne die Newton-Zahl, n die Rührgeschwindigkeit (in U/sec), d der Rührerdurchmesser, ρ die Dichte des Reaktionsinhalts und V das Volumen des Reaktorinhalts sind. Die Newton-Zahl kann dem Buch von Zlokarnik (S. 75-78) entnommen werden.

Alternativ lässt sich der Leistungseintrag aus der Umpumprate (in $m^3/h$), bezogen auf das Reaktorvolumen (in $m^3$), demnach in $m^3/h/m^3$, wie folgt ermitteln:

$$P = \Delta p * \dot{m} / V \qquad \text{(Formel 2)},$$

wobei Δp der Druckabfall zwischen Pumpenausgang und Eintritt in den Reaktor (in Pa), m die Flußrate (in $m^3/s$) und V das Volumen des Reaktorinhalts sind.

Die Umpumprate kann somit auch durch einen Leistungseintrag angegeben werden; wenn z. B. die Umpumprate, bezogen auf das Reaktorvolumen, innerhalb des erfindungsgemäßen Bereichs zwischen 3 und 150 $m^3/h/m^3$ liegt, bevorzugt zwischen 4 und 100 $m^3/h/m^3$, ganz bevorzugt zwischen 5 und 80 $m^3/h/m^3$, dann liegt der Leistungseintrag durch das angegebene Umpumpen, bezogen auf das Reaktorvolumen, im Bereich zwischen 0,001 und 1 $kW/m^3$, bevorzugt zwischen 0,002 und 0,5 $kW/m^3$, ganz bevorzugt zwischen 0,003 und 0,25 $kW/m^3$.

Der Eintrag der Rührleistung kann entweder durch den Rührer, oder durch Umpumpen, oder sowohl durch Rühren als auch Umpumpen erfolgen, und während des Ablaufs der Reaktion nach der einen oder anderen Weise, ggf. wechselnd, erfolgen, je nachdem, was die Reaktionsführung erfordert.

Insbesondere bei niedrigem Füllstand des Reaktors, d. h. für die Reaktion zu Anfang, kann es erforderlich sein, nur auf eine der genannten Weisen zu durchmischen, und Rührerdrehzahl oder Umpumprate später anzupassen.

Insbesondere falls ein Rührer zur Anwendung kommt, kann zusätzlich ein Strömungsbrecher verwendet werden. Strömungsbrecher sind strömungsbrechende Einbauten in Rührkesseln. Sie verhindern das Mitrotieren des durch das zentrische Rührwerk bewegten Fluids im Rührkessel und sind in der Regel an der Behälterwand angebracht.

Das erfindungsgemäße Verfahren zur organokatalytischen ringöffnenden Polymerisation kann somit mit mindestens einem Strömungsbrecher durchgeführt werden.

In den folgenden Abschnitten werden zur Verdeutlichung einiger Aspekte der vorliegenden Erfindung Beispiele angeführt. Diese Beispiele haben nur illustrierenden Charakter und sollen keinesfalls den Umfang der vorliegenden Erfindung begrenzen.

Beispiele (die Beispiele 2 und 3 sind nicht erfinderisch)

Einfluss der Temperatur ($T_{act}$)

| | $T_{act}$ | Ausbeute | | OH-Zahl (mg(KOH)/g) | | Viskosität |
|---|---|---|---|---|---|---|
| Beispiel 1 | 140 °C | 82,8% | 83,2% | 36,53 | 36,61 | 1020 mPas |
| | | 83,6% | | 36,69 | | 795 mPas |
| Beispiel 2 | 120 °C | 81.0% | 80.4% | 37,17 | 36,95 | 489 mPas |
| | | 79,8% | | 36,74 | | 585 mPas |
| Beispiel 3 | 160 °C | 76,9% | 76,5% | 39,13 | 38,69 | 354 mPas |
| | | 76,1% | | 38,26 | | 741 mPas |

Beispiel 1

In einem 300 mL Reaktor wurden 50.0 g eines auf Glycerin basierenden Polypropoxylates (OH-Zahl = 91,07 mg(KOH)/g; Polydispersität 1,1) und 1,6 g Dipropylimidazolium-Acetat vorgelegt. Nach der Inertisierung wurde der Reaktor auf eine Temperatur von 140 °C für 10 h unter Vakuum erhitzt und anschließend auf die Rekationstemperatur von 105 °C abgekühlt. Bei dieser Temperatur wurden 136,9 g Propylenoxid zudosiert und ein Druckabfall durch die Propoxylierung beobachtet. Die Reaktion wurde beendet nach konstantem Druck (Δp (1 min) ≤ 0,1 bar) und der Reaktor evakuiert. Anschließend wurden 3,5 bar Stickstoff in den Reaktor aufgepresst und 29,9 g Ethylenoxid dosiert. Nach beendeter Reaktion (Δp (1 min) ≤ 0,1 bar) wurde der Reaktor evakuiert und auf 25 °C abgekühlt. Es wurden 180,8 g

Produkt erhalten. (Ausbeute 82,8%, OH-Zahl 36,53 mg(KOH)/g, Viskosität 1020 mPas)

Beispiel 2

In einem 300 mL Reaktor wurden 50.0 g eines auf Glycerin basierenden Polypropoxylates (OH-Zahl = 91,07 mg(KOH)/g; Polydispersität 1,1) und 1,6 g Dipropylimidazolium-Acetat vorgelegt. Nach der Inertisierung wurde der Reaktor auf eine Temperatur von 120 °C für 10 h unter Vakuum erhitzt und anschließend auf die Rekationstemperatur von 105 °C abgekühlt. Bei dieser Temperatur wurden 136,9 g Propylenoxid zudosiert und ein Druckabfall durch die Propoxylierung beobachtet. Die Reaktion wurde beendet nach konstantem Druck ($\Delta p$ (1 min) $\leq$ 0,1 bar) und der Reaktor evakuiert. Anschließend wurden 3,5 bar Stickstoff in den Reaktor aufgepresst und 29,9 g Ethylenoxid dosiert. Nach beendeter Reaktion ($\Delta p$ (1 min) $\leq$ 0,1 bar) wurde der Reaktor evakuiert und auf 25 °C abgekühlt. Es wurden 177,0 g Produkt erhalten. (Ausbeute 81,0%, OH-Zahl 37,17 mg(KOH)/g, Viskosität 489 mPas)

Beispiel 3

In einem 300 mL Reaktor wurden 50.0 g eines auf Glycerin basierenden Polypropoxylates (OH-Zahl = 91,07 mg(KOH)/g; Polydispersität 1,1) und 1,6 g Dipropylimidazolium-Acetat vorgelegt. Nach der Inertisierung wurde der Reaktor auf eine Temperatur von 160 °C für 10 h unter Vakuum erhitzt und anschließend auf die Rekationstemperatur von 105 °C abgekühlt. Bei dieser Temperatur wurden 136,9 g Propylenoxid zudosiert und ein Druckabfall durch die Propoxylierung beobachtet. Die Reaktion wurde beendet nach konstantem Druck ($\Delta p$ (1 min) $\leq$ 0,1 bar) und der Reaktor evakuiert. Anschließend wurden 3,5 bar Stickstoff in den Reaktor aufgepresst und 29,9 g Ethylenoxid dosiert. Nach beendeter Reaktion ($\Delta p$ (1 min) $\leq$ 0,1 bar) wurde der Reaktor evakuiert und auf 25 °C abgekühlt. Es wurden 168,0 g Produkt erhalten. (Ausbeute 76,9%, OH-Zahl 39,13 mg(KOH)/g, Viskosität 354 mPas)

Einfluss der Aktivierungszeit ($t_{act}$) (Die Beispiele 5 und 6 sind nicht erfinderisch)

| | $t_{act}$ | Ausbeute | | OH-Zahl (mg(KOH)/g | | Viskosität |
|---|---|---|---|---|---|---|
| Beispiel 4 | 1 h | 82,9% | 82,1% | 36,78 | 36,37 | 703 mPas |
| | | 81,4% | | 35,96 | | 674 mPas |
| Beispiel 5 | 0.5 h | 80,8% | 81,4% | 35,58 | 35,61 | 511 mPas |
| | | 82,0% | | 35,65 | | 552 mPas |
| Beispiel 6 | 2.5 h | 83,0% | 80,8% | 37,35 | 37,76 | 807 mPas |
| | | 78,6% | | 38,18 | | 785 mPas |

Beispiel 4

In einem 300 mL Reaktor wurden 50.0 g eines auf Glycerin basierenden Polypropoxylates (OH-Zahl = 91,07 mg(KOH)/g; Polydispersität 1,1) und 1,6 g Dipropylimidazolium-Acetat vorgelegt. Nach der Inertisierung wurde der Reaktor auf eine Temperatur von 140 °C für 1 h unter Vakuum erhitzt und anschließend auf die Rekationstemperatur von 105 °C abgekühlt. Bei dieser Temperatur wurden 136,9 g Propylenoxid zudosiert und ein Druckabfall durch die Propoxylierung beobachtet. Die Reaktion wurde beendet nach konstantem Druck ($\Delta p$ (1 min) $\leq$ 0,1 bar) und der Reaktor evakuiert. Anschließend wurden 3,5 bar Stickstoff in den Reaktor aufgepresst und 29,9 g Ethylenoxid dosiert. Nach beendeter Reaktion ($\Delta p$ (1 min) $\leq$ 0,1 bar) wurde der Reaktor evakuiert und auf 25 °C abgekühlt. Es wurden 181,0 g Produkt erhalten. (Ausbeute 82,4%, OH-Zahl 36,78 mg(KOH)/g, Viskosität 703 mPas)

Beispiel 5

In einem 300 mL Reaktor wurden 50.0 g eines auf Glycerin basierenden Polypropoxylates (OH-Zahl = 91,07 mg(KOH)/g; Polydispersität 1,1) und 1,6 g Dipropylimidazolium-Acetat vorgelegt. Nach der Inertisierung wurde der Reaktor auf eine Temperatur von 140 °C für 0.5 h unter Vakuum erhitzt und anschließend auf die Rekationstemperatur von 105 °C abgekühlt. Bei dieser Temperatur wurden 136,9 g Propylenoxid zudosiert und ein Druckabfall durch die Propoxylierung beobachtet. Die Reaktion wurde beendet nach konstantem Druck ($\Delta p$ (1 min) $\leq$ 0,1 bar) und der Reaktor evakuiert. Anschließend wurden 3,5 bar Stickstoff in den Reaktor aufgepresst und 29,9 g Ethylenoxid dosiert. Nach beendeter Reaktion ($\Delta p$ (1 min) $\leq$ 0,1 bar) wurde der Reaktor evakuiert und auf 25 °C abgekühlt. Es wurden 176,6 g Produkt erhalten. (Ausbeute 77,6%, OH-Zahl 35,58 mg(KOH)/g, Viskosität 511 mPas)

Beispiel 6

In einem 300 mL Reaktor wurden 50.0 g eines auf Glycerin basierenden Polypropoxylates (OH-Zahl = 91,07 mg(KOH)/g; Polydispersität 1,1) und 1,6 g Dipropylimidazolium-Acetat vorgelegt. Nach der Inertisierung wurde der Reaktor auf eine Temperatur von 140 °C für 2.5 h unter Vakuum erhitzt und anschließend auf die Rekationstemperatur von 105 °C abgekühlt. Bei dieser Temperatur wurden 136,9 g Propylenoxid zudosiert und ein Druckabfall durch die Propoxylierung beobachtet. Die Reaktion wurde beendet nach konstantem Druck (Δp (1 min) ≤ 0,1 bar) und der Reaktor evakuiert. Anschließend wurden 3,5 bar Stickstoff in den Reaktor aufgepresst und 29,9 g Ethylenoxid dosiert. Nach beendeter Reaktion (Δp (1 min) ≤ 0,1 bar) wurde der Reaktor evakuiert und auf 25 °C abgekühlt. Es wurden 181,3 g Produkt erhalten. (Ausbeute 83.0 %, OH-Zahl 37,35 mg(KOH)/g, Viskosität 807 mPas)

Die beschriebenen Polymerisationsprodukte dienen unter anderem als Vorstufe für die Polyurethansynthese. Polyurethane können als Schaummaterial, thermoplastische Polyurethane, Polyurethandispersion und so weiter genutzt werden.

## Patentansprüche

1. Verfahren zur organokatalytischen ringöffnenden Polymerisation mindestens eines zur ringöffnenden Polymerisation geeigneten Monomers M ausgewählt aus der Gruppe enthaltend Alkylenoxide, ausgewählt aus der Gruppe bestehend aus Ethylenoxid, Propylenoxid und Butylenoxid und Mischungen daraus, sowie cyclische Lactone, Lactide, cyclische Siloxane, oder von Mischungen daraus, wobei in einem Schritt (i) mindestens eine N-heterocyclische Verbindung der Formel (I)

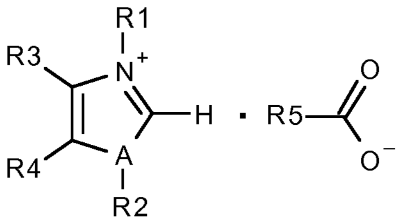

,

wobei A ausgewählt ist aus der Gruppe bestehend aus N, O und S, bevorzugt N - wobei kein Rest R2 vorliegt, wenn A gleich O oder S ist -, und wobei R1 und R2 jeweils unabhängig voneinander ausgewählt sind aus Alkyl und Aryl, und wobei R3, R4 und R5 jeweils unabhängig voneinander ausgewählt sind aus H, Alkyl, Aryl, und wobei auch Ringschlüsse zwischen R1 und R3, R3 und R4 sowie R4 und R2 möglich sind, in Gegenwart mindestens einer Zerewitinoff-aktiven Verbindung Z1, bevorzugt unter Vakuum, einer Temperatur im Bereich von 135 °C bis 145 °C, bevorzugt 137 °C bis 143 °C, für eine Dauer von bevorzugt mindestens 55 Minuten ausgesetzt wird, und in einem Schritt (ii) das Monomer M zugegeben und, optional in Gegenwart einer Zerewitinoff-aktiven Verbindung Z2, zur Reaktion gebracht wird, wobei der Schritt (i) zwischen 50 Minuten bis 100 Minuten dauert.

2. Verfahren zur organokatalytischen ringöffnenden Polymerisation gemäß Anspruch 1, wobei R1 und R2 jeweils primäre Alkylgruppen sind.

3. Verfahren zur organokatalytischen ringöffnenden Polymerisation gemäß Anspruch 1, wobei R1 eine primäre und R2 eine sekundäre Alkylgruppe ist.

4. Verfahren zur organokatalytischen ringöffnenden Polymerisation gemäß Anspruch 1, wobei R1 und R2 jeweils sekundäre Alkylgruppen sind.

5. Verfahren zur organokatalytischen ringöffnenden Polymerisation gemäß einem der Ansprüche 1 bis 4, wobei das Anion in der Formel (I) ausgewählt ist aus der Gruppe enthaltend Formiat, Acetat und Propionat, bevorzugt Acetat.

6. Verfahren zur organokatalytischen ringöffnenden Polymerisation gemäß einem der Ansprüche 1 bis 4, wobei das Anion in der Formel (I) ausgewählt ist aus der Gruppe enthaltend Benzoat, Phthalat, Terephthalat, Isophthalat, Succinat, und Glutarat.

7. Verfahren zur organokatalytischen ringöffnenden Polymerisation gemäß einem der Ansprüche 1 bis 5, wobei die

Formel (I) Dipropylimidazolium-Acetat darstellt.

8. Verfahren zur ringöffnenden Polymerisation gemäß einem der Ansprüche 1 bis 7, wobei Schritt (ii) erst nach Ende des Schritts (i) durchgeführt wird.

9. Verfahren zur ringöffnenden Polymerisation gemäß einem der Ansprüche 1 bis 7, wobei Schritt (ii) bereits während der Dauer des Schritts (i) beginnt, und wobei im Schritt (i) kein Vakuum angelegt wird.

10. Verfahren zur ringöffnenden Polymerisation gemäß einem der vorangehenden Ansprüche, wobei mindestens eine Zerewitinoff-aktive Verbindung Z1 ausgewählt ist aus der Gruppe bestehend aus Alkoholen.

11. Verfahren zur ringöffnenden Polymerisation gemäß einem der vorangehenden Ansprüche, wobei mindestens eine Zerewitinoff-aktive Verbindung Z1 ausgewählt ist aus der Gruppe bestehend aus Aminen.

12. Verfahren zur ringöffnenden Polymerisation gemäß einem der vorangehenden Ansprüche, wobei mindestens zwei Zerewitinoff-aktive Verbindungen Z1 verwendet werden, wobei mindestens eine Zerewitinoff-aktive Verbindung Z1a ausgewählt ist aus der Gruppe bestehend aus Alkoholen, und mindestens eine Zerewitinoff-aktive Verbindung Z1b ausgewählt ist aus der Gruppe bestehend aus Aminen.

13. Verfahren zur ringöffnenden Polymerisation gemäß einem der vorangehenden Ansprüche, wobei mindestens eine Zerewitinoff-aktive Verbindung Z2 ausgewählt ist aus der Gruppe bestehend aus Alkoholen und Aminen, bevorzugt Alkoholen, und Mischungen daraus.

14. Verfahren zur ringöffnenden Polymerisation gemäß einem der Ansprüche 1 bis 13, wobei die Verbindung Z2 gleich der Verbindung Z1 ist.

15. Verfahren zur ringöffnenden Polymerisation gemäß einem der Ansprüche 1 bis 13, wobei die Verbindung Z2 nicht der Verbindung Z1 entspricht.

16. Verfahren zur ringöffnenden Polymerisation gemäß einem der vorangehenden Ansprüche, wobei im Schritt (i) keine Base mit einem $pK_b$ ($H_2O$) kleiner 1 verwendet wird.

17. Verfahren zur ringöffnenden Polymerisation gemäß einem der vorangehenden Ansprüche, wobei das mindestens eine zur ringöffnenden Polymerisation geeignete Monomer M ausgewählt ist aus der Gruppe enthaltend Mischungen enthaltend Alkylenoxide, ausgewählt aus der Gruppe bestehend aus Ethylenoxid, Propylenoxid, Butylenoxid, bevorzugt Alkylenoxide, ausgewählt aus der Gruppe bestehend aus Ethylenoxid, Propylenoxid, Butylenoxid und Mischungen daraus.

18. Verfahren zur ringöffnenden Polymerisation gemäß Anspruch 17, wobei mindestens ein Alkylenoxid ausgewählt ist aus der Gruppe bestehend aus Mischungen enthaltend Propylenoxid, besonders bevorzugt Propylenoxid.

19. Verfahren zur ringöffnenden Polymerisation gemäß einem der vorangehenden Ansprüche, wobei mindestens zwei zur ringöffnenden Polymerisation geeignete Monomere M verwendet werden, wobei mindestens eines der zur ringöffnenenden Polymerisation geeigneten Monomere ausgewählt ist aus der Gruppe der Alkylenoxide, ausgewählt aus der Gruppe bestehend aus Ethylenoxid, Propylenoxid, Butylenoxid und Mischungen daraus, und wobei mindestens eines der zur ringöffnenenden Polymerisation geeigneten Monomere ausgewählt ist aus der Gruppe der Lactone.

20. Verfahren zur ringöffnenden Polymerisation gemäß einem der vorangehenden Ansprüche, wobei der Schritt (i) zwischen 55 Minuten bis 70 Minuten dauert.

21. Verfahren zur ringöffnenden Polymerisation gemäß einem der Ansprüche 1 bis 8 oder 10 bis 20, wobei während des Schritts (i) ein Vakuum angelegt wird.

22. Verfahren zur ringöffnenden Polymerisation gemäß einem der vorangehenden Ansprüche, wobei das mindestens eine zur ringöffnenden Polymerisation geeignete Monomer M ausgewählt ist aus der Gruppe enthaltend Alkylenoxide, ausgewählt aus der Gruppe bestehend aus Ethylenoxid, Propylenoxid, Butylenoxid und Mischungen daraus, wobei die Temperatur während der Umsetzung mit dem mindestens einen Monomer M im Schritt (ii) nach Ende

des Schritts (i) im Bereich von 80 °C bis 130 °C, bevorzugt im Bereich von 90 °C bis 120 °C, besonders bevorzugt 100 bis 110 °C liegt.

**23.** Verfahren zur ringöffnenden Polymerisation gemäß einem der vorangehenden Ansprüche, wobei das Monomer M ausgewählt ist aus der Gruppe bestehend aus Ethylenoxid, Propylenoxid, Butylenoxid und Mischungen daraus, bevorzugt Mischungen enthaltend Propylenoxid, und die Zerewitinoff-aktive Verbindung Z1 ausgewählt ist aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, $C_1$- bis $C_{18}$-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen, und die Zerewitinoff-aktive Verbindung Z2 ausgewählt ist aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, $C_1$-bis $C_{18}$-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen, und die Temperatur im Schritt (i) im Bereich von 135 °C bis 145 °C für eine Dauer von 50 bis 70 Minuten liegt, und die Temperatur im Schritt (ii) nach Ende des Schritts (i) im Bereich von 80 °C bis 130 °C, bevorzugt im Bereich von 90 °C bis 120 °C, besonders bevorzugt 100 bis 110 °C liegt.

**24.** Verfahren zur ringöffnenden Polymerisation gemäß einem der vorangehenden Ansprüche, wobei der Leistungseintrag durch mindestens einen Rührer und/oder durch mindestens eine Pumpe, bezogen auf das Reaktorvolumen, im Bereich von 0,001 bis 8,2 $kW/m^3$ liegt.

**25.** Verwendung eines nach dem Verfahren eines der Ansprüche 1 bis 24 herstellbaren Polymerisations-Produkts zur Herstellung von Polyurethanen, durch Umsetzung mit mindestens einem Di- oder Polyisocyanat und optional mindestens einem Treibmittel.

## Claims

**1.** A process for organocatalytic ring-opening polymerization of at least one monomer M suitable for ring-opening polymerization selected from the group comprising alkylene oxides selected from the group consisting of ethylene oxide, propylene oxide and butylene oxide and mixtures thereof, and cyclic lactones, lactides, cyclic siloxanes, or of mixtures thereof, wherein, in a step (i), at least one N-heterocyclic compound of the formula (I)

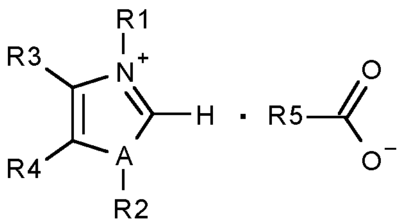

where A is selected from the group consisting of N, O and S, preferably N - where no R2 radical is present when A is O or S - and where R1 and R2 are each independently selected from alkyl and aryl, and where R3, R4 and R5 are each independently selected from H, alkyl, aryl, and where ring closures between R1 and R3, R3 and R4, and R4 and R2 are also possible, is subjected in the presence of at least one Zerevitinov-active compound Z1, preferably under vacuum, to a temperature in the range from 135°C to 145°C, preferably 137°C to 143°C, for a period of preferably at least 55 minutes, and, in a step (ii), the monomer M is added and reacted, optionally in the presence of a Zerevitinov-active compound Z2, wherein step (i) takes between 50 minutes and 100 minutes.

**2.** The process for organocatalytic ring-opening polymerization according to claim 1, wherein R1 and R2 are each primary alkyl groups.

**3.** The process for organocatalytic ring-opening polymerization according to claim 1, wherein R1 is a primary and R2 a secondary alkyl group.

**4.** The process for organocatalytic ring-opening polymerization according to claim 1, wherein R1 and R2 are each secondary alkyl groups.

**5.** The process for organocatalytic ring-opening polymerization according to any of claims 1 to 4, wherein the anion in the formula (I) is selected from the group comprising formate, acetate and propionate, preferably acetate.

**6.** The process for organocatalytic ring-opening polymerization according to any of claims 1 to 4, wherein the anion in the formula (I) is selected from the group comprising benzoate, phthalate, terephthalate, isophthalate, succinate and glutarate.

**7.** The process for organocatalytic ring-opening polymerization according to any of claims 1 to 5, wherein formula (I) represents dipropylimidazolium acetate.

**8.** The process for ring-opening polymerization according to any of claims 1 to 7, wherein step (ii) is not conducted until after the end of step (i).

**9.** The process for ring-opening polymerization according to any of claims 1 to 7, wherein step (ii) already commences during the duration of step (i), and wherein no vacuum is applied in step (i).

**10.** The process for ring-opening polymerization according to any of the preceding claims, wherein at least one Zerevitinov-active compound Z1 is selected from the group consisting of alcohols.

**11.** The process for ring-opening polymerization according to any of the preceding claims, wherein at least one Zerevitinov-active compound Z1 is selected from the group consisting of amines.

**12.** The process for ring-opening polymerization according to any of the preceding claims, wherein at least two Zerevitinov-active compounds Z1 are used, at least one Zerevitinov-active compound Z1a being selected from the group consisting of alcohols, and at least one Zerevitinov-active compound Z1b being selected from the group consisting of amines.

**13.** The process for ring-opening polymerization according to any of the preceding claims, wherein at least one Zerevitinov-active compound Z2 is selected from the group consisting of alcohols and amines, preferably alcohols, and mixtures thereof.

**14.** The process for ring-opening polymerization according to any of claims 1 to 13, wherein the compound Z2 is the same as the compound Z1.

**15.** The process for ring-opening polymerization according to any of claims 1 to 13, wherein the compound Z2 does not correspond to the compound Z1.

**16.** The process for ring-opening polymerization according to any of the preceding claims, wherein no base with a $pK_b$ ($H_2O$) less than 1 is used in step (i) .

**17.** The process for ring-opening polymerization according to any of the preceding claims, wherein the at least one monomer M suitable for ring-opening polymerization is selected from the group comprising mixtures comprising alkylene oxides selected from the group consisting of ethylene oxide, propylene oxide, butylene oxide, preferably alkylene oxides selected from the group consisting of ethylene oxide, propylene oxide, butylene oxide, and mixtures thereof.

**18.** The process for ring-opening polymerization according to claim 17, wherein at least one alkylene oxide is selected from the group consisting of mixtures comprising propylene oxide, more preferably propylene oxide.

**19.** The process for ring-opening polymerization according to any of the preceding claims, wherein at least two monomers M suitable for ring-opening polymerization are used, at least one of the monomers suitable for ring-opening polymerization being selected from the group of the alkylene oxides selected from the group consisting of ethylene oxide,

propylene oxide, butylene oxide, and mixtures thereof, and at least one of the monomers suitable for ring-opening polymerization being selected from the group of the lactones.

**20.** The process for ring-opening polymerization according to any of the preceding claims, wherein step (i) takes between 55 minutes and 70 minutes.

**21.** The process for ring-opening polymerization according to any of claims 1 to 8 or 10 to 20, wherein a vacuum is applied during step (i).

**22.** The process for ring-opening polymerization according to any of the preceding claims, wherein the at least one monomer M suitable for ring-opening polymerization is selected from the group comprising alkylene oxides selected from the group consisting of ethylene oxide, propylene oxide, butylene oxide, and mixtures thereof, the temperature during the reaction with the at least one monomer M in step (ii), after the end of step (i), being in the range from 80°C to 130°C, preferably in the range from 90°C to 120°C, more preferably 100°C to 110°C.

**23.** The process for ring-opening polymerization according to any of the preceding claims, wherein the monomer M is selected from the group consisting of ethylene oxide, propylene oxide, butylene oxide and mixtures thereof, preferably mixtures comprising propylene oxide, and the Zerevitinov-active compound Z1 is selected from the group of the alcohols and mixtures thereof, preferably from the group comprising polyols, especially glycerol, ethylene glycol, diethylene glycol, propylene glycol, dipropylene glycol, pentaerythritol, sorbitol, sucrose, $C_1$- to $C_{18}$-diols, castor oil, epoxidized and ring-opened fatty acids and esters thereof, trimethylolpropane, pentaerythritol, sugar compounds, for example glucose, sorbitol, mannitol and sucrose, polyhydric phenols, resols, for example oligomeric condensation products formed from phenol and formaldehyde and Mannich condensates formed from phenols, formaldehyde, dialkanolamines, melamine, and mixtures of at least two of the compounds listed, and the Zerevitinov-active compound Z2 is selected from the group of the alcohols and mixtures thereof, preferably from the group comprising polyols, especially glycerol, ethylene glycol, diethylene glycol, propylene glycol, dipropylene glycol, pentaerythritol, sorbitol, sucrose, $C_1$- to $C_{18}$-diols, castor oil, epoxidized and ring-opened fatty acids and esters thereof, trimethylolpropane, pentaerythritol, sugar compounds, for example glucose, sorbitol, mannitol and sucrose, polyhydric phenols, resols, for example oligomeric condensation products formed from phenol and formaldehyde and Mannich condensates formed from phenols, formaldehyde, dialkanolamines, melamine, and mixtures of at least two of the compounds listed, and the temperature in step (i) is in the range from 135°C to 145°C for a duration of 50 to 70 minutes, and the temperature in step (ii), after the end of step (i), is in the range from 80°C to 130°C, preferably in the range from 90°C to 120°C, more preferably 100°C to 110°C.

**24.** The process for ring-opening polymerization according to any of the preceding claims, wherein the power input by at least one stirrer and/or by at least one pump, based on the reactor volume, is in the range from 0.001 to 8.2 $kW/m^3$.

**25.** The use of a polymerization product producible by the process of any of claims 1 to 24 for preparation of polyurethanes, by reaction with at least one di- or polyisocyanate and optionally at least one blowing agent.

## Revendications

**1.** Procédé pour la polymérisation organocatalytique avec ouverture de cycle d'au moins un monomère M, approprié pour la polymérisation avec ouverture de cycle, choisi dans le groupe contenant les oxydes d'alkylène, choisis dans le groupe constitué par l'oxyde d'éthylène, l'oxyde de propylène et l'oxyde de butylène et leurs mélanges, ainsi que les lactones cycliques, les lactides, les siloxanes cycliques, ou leurs mélanges, dans une étape (i), au moins un composé N-hétérocyclique de formule (I),

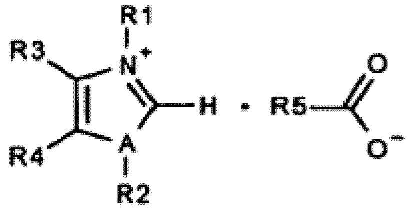

,

A étant choisi dans le groupe constitué par N, O et S, de préférence N - le radical R2 n'étant pas présent lorsque A représente O ou S -, et R1 et R2 étant choisis, à chaque fois indépendamment l'un de l'autre, parmi alkyle et aryle et R3, R4 et R5 étant choisis, à chaque fois indépendamment les uns des autres, parmi H, alkyle, aryle et des cyclisations étant également possibles entre R1 et R3, entre R3 et R4 ainsi qu'entre R4 et R2, étant soumis, en présence d'au moins un composé Z1 actif selon Zerewitinoff, de préférence sous vide, à une température dans la plage de 135°C à 145°C, de préférence de 137°C à 143°C, pour une durée de préférence d'au moins 55 minutes, et, dans une étape (ii), le monomère M étant ajouté et amené à réagir, facultativement en présence d'un composé Z2 actif selon Zerewitinoff, l'étape (i) durant entre 50 minutes et 100 minutes.

**2.** Procédé pour la polymérisation organocatalytique avec ouverture de cycle selon la revendication 1, R1 et R2 étant à chaque fois des groupes alkyle primaire.

**3.** Procédé pour la polymérisation organocatalytique avec ouverture de cycle selon la revendication 1, R1 étant un groupe alkyle primaire et R2 étant un groupe alkyle secondaire.

**4.** Procédé pour la polymérisation organocatalytique avec ouverture de cycle selon la revendication 1, R1 et R2 étant à chaque fois des groupes alkyle secondaire.

**5.** Procédé pour la polymérisation organocatalytique avec ouverture de cycle selon l'une quelconque des revendications 1 à 4, l'anion dans la formule (I) étant choisi dans le groupe contenant les anions formiate, acétate et propionate, de préférence acétate.

**6.** Procédé pour la polymérisation organocatalytique avec ouverture de cycle selon l'une quelconque des revendications 1 à 4, l'anion dans la formule (I) étant choisi dans le groupe contenant les anions benzoate, phtalate, téréphtalate, isophtalate, succinate, et glutarate.

**7.** Procédé pour la polymérisation organocatalytique avec ouverture de cycle selon l'une quelconque des revendictions 1 à 5, la formule (I) représentant l'acétate de dipropylimidazolium.

**8.** Procédé pour la polymérisation avec ouverture de cycle selon l'une quelconque des revendications 1 à 7, l'étape (ii) n'étant réalisée qu'après la fin de l'étape (i).

**9.** Procédé pour la polymérisation avec ouverture de cycle selon l'une quelconque des revendications 1 à 7, l'étape (ii) démarrant déjà pendant la durée de l'étape (i) et un vide n'étant pas appliqué pendant l'étape (i).

**10.** Procédé pour la polymérisation avec ouverture de cycle selon l'une quelconque des revendications précédentes, au moins un composé Z1 actif selon Zerewitinoff étant choisi dans le groupe constitué par les alcools.

**11.** Procédé pour la polymérisation avec ouverture de cycle selon l'une quelconque des revendications précédentes, au moins un composé Z1 actif selon Zerewitinoff étant choisi dans le groupe constitué par les amines.

**12.** Procédé pour la polymérisation avec ouverture de cycle selon l'une quelconque des revendications précédentes, au moins deux composés Z1 actifs selon Zerewitinoff étant utilisés, au moins un composé Z1a actif selon Zerewitinoff étant choisi dans le groupe constitué par les alcools et au moins un composé Z1b actif selon Zerewitinoff étant choisi dans le groupe constitué par les amines.

**13.** Procédé pour la polymérisation avec ouverture de cycle selon l'une quelconque des revendications précédentes, au moins un composé Z2 actif selon Zerewitinoff étant choisi dans le groupe constitué par les alcools et les amines, de préférence les alcools, et leurs mélanges.

**14.** Procédé pour la polymérisation avec ouverture de cycle selon l'une quelconque des revendications 1 à 13, le composé Z2 étant identique au composé Z1.

**15.** Procédé pour la polymérisation avec ouverture de cycle selon l'une quelconque des revendications 1 à 13, le composé Z2 ne correspondant pas au composé Z1.

**16.** Procédé pour la polymérisation avec ouverture de cycle selon l'une quelconque des revendications précédentes, aucune base présentant un $pK_b$ ($H_2O$) inférieur à 1 n'étant utilisée dans l'étape (i).

**17.** Procédé pour la polymérisation avec ouverture de cycle selon l'une quelconque des revendications précédentes, ledit au moins un monomère M approprié pour la polymérisation avec ouverture de cycle étant choisi dans le groupe contenant des mélanges contenant des oxydes d'alkylène, choisis dans le groupe constitué par l'oxyde d'éthylène, l'oxyde de propylène et l'oxyde de butylène, de préference des oxydes d'alkylène choisis dans le groupe constitué par l'oxyde d'éthylène, l'oxyde de propylène, l'oxyde de butylène et leurs mélanges.

**18.** Procédé pour la polymérisation avec ouverture de cycle selon la revendication 17, au moins un oxyde d'alkylène étant choisi dans le groupe constitué par des mélanges contenant de l'oxyde de propylène, de manière particulièrement préférée l'oxyde de propylène.

**19.** Procédé pour la polymérisation avec ouverture de cycle selon l'une quelconque des revendications précédentes, au moins deux monomères M appropriés pour la polymérisation avec ouverture de cycle étant utilisés, au moins un des monomères appropriés pour la polymérisation avec ouverture de cycle étant choisi dans le groupe des oxydes d'alkylène, choisis dans le groupe constitué par l'oxyde d'éthylène, l'oxyde de propylène, l'oxyde de butylène et leurs mélanges et au moins un des monomères appropriés pour la polymérisation avec ouverture de cycle étant choisi dans le groupe des lactones.

**20.** Procédé pour la polymérisation avec ouverture de cycle selon l'une quelconque des revendications précédentes, l'étape (i) durant entre 55 minutes et 70 minutes.

**21.** Procédé pour la polymérisation avec ouverture de cycle selon l'une quelconque des revendications 1 à 8 ou 10 à 20, un vide étant appliqué pendant l'étape (i) .

**22.** Procédé pour la polymérisation avec ouverture de cycle selon l'une quelconque des revendications précédentes, ledit au moins un monomère M approprié pour la polymérisation avec ouverture de cycle étant choisi dans le groupe contenant les oxydes d'alkylène, choisis dans le groupe constitué par l'oxyde d'éthylène, l'oxyde de propylène, l'oxyde de butylène et leurs mélanges, la température pendant la transformation avec ledit au moins un monomère M dans l'étape (ii) après la fin de l'étape (i) se situant dans la plage de 80°C à 130°C, de préférence dans la plage de 90°C à 120°C, de manière particulièrement préférée de 100°C à 110°C.

**23.** Procédé pour la polymérisation avec ouverture de cycle selon l'une quelconque des revendications précédentes, le monomère M étant choisi dans le groupe constitué par l'oxyde d'éthylène, l'oxyde de propylène, l'oxyde de butylène et leurs mélanges, de préference des mélanges contenant de l'oxyde de propylène, et le composé Z1 actif selon Zerewitinoff étant choisi dans le groupe des alcools et leurs mélanges, de préférence dans le groupe contenant des polyols, en particulier le glycérol, l'éthylèneglycol, le diéthylèneglycol, le propylèneglycol, le dipropylèneglycol, le pentaérythritol, le sorbitol, le saccharose, les $C_1$-$C_{18}$-diols, l'huile de ricin, les acides gras époxydés et à cycle ouvert et leurs esters, le triméthylolpropane, le pentaérythritol, les composés du sucre tel que par exemple le glucose, le sorbitol, le mannitol et le saccharose, les phénols polyvalents, les résols, tels que par exemple des produits de condensation oligomères de phénol et de formaldéhyde et des produits de condensation de Mannich de phénol, de formaldéhyde, de dialcanolamines, de mélamine ainsi que des mélanges d'au moins deux des composés indiqués, et le composé Z2 actif selon Zerewitinoff étant choisi dans le groupe des alcools et leurs mélanges, de préférence dans le groupe contenant les polyols, en particulier le glycérol, l'éthylèneglycol, le diéthylèneglycol, le propylèneglycol, le dipropylèneglycol, le pentaérythritol, le sorbitol, le saccharose, les $C_1$-$C_{18}$-diols, l'huile de ricin, les acides gras époxydés et à cycle ouvert et leurs esters, le triméthylolpropane, le pentaérythritol, les composés de sucre tels que par exemple le glucose, la sorbitol, le mannitol et le saccharose, les phénols polyvalents, les résols, tels que par exemple les produits de condensation oligomères de phénol et de formaldéhyde et les produits de condensation de Mannich de phénols, de formaldéhyde, de dialcanolamines, de mélamine, ainsi que des mélanges d'au moins deux des composés indiqués et la température dans l'étape (i) se situant dans la plage de 135°C à 145°C pour une durée de 50 à 70 minutes et la température dans l'étape (ii) après la fin de l'étape (i) se situant dans la plage de 80°C à 130°C, de préférence dans la plage de 90°C à 120°C, de manière particulièrement préférée de 100°C à 110°C.

**24.** Procédé pour la polymérisation avec ouverture de cycle selon l'une quelconque des revendications précédentes, l'apport de puissance par au moins un agitateur et/ou par au moins une pompe, par rapport au volume du réacteur, se situant dans la plage de 0,001 à 8,2 $kW/m^3$.

**25.** Utilisation d'un produit de polymérisation pouvant être préparé selon le procédé selon l'une quelconque des revendications 1 à 24 pour la fabrication de polyuréthanes, par transformation avec au moins un diisocyanate ou polyisocyanate et facultativement au moins un moyen propulseur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009013344 A
- WO 2011141492 A
- WO 2008152003 A1
- EP 2644635 A


### In der Beschreibung aufgeführte Nicht-Patentliteratur


- **DOVE et al.** *Polymer,* 2006, vol. 47, 4018
- *ACS Polymer Preprints,* 2006, vol. 47, 99
- **RAYNAUD et al.** *JACS,* 2009, vol. 131, 3201
- *Chem. Commun.,* 2010, vol. 46, 3203
- *J. Organomet. Chem.,* 2001, vol. 617, 242
- *J. Polym. Sci.: Polym. Lett.,* 1983, vol. 21, 633
- **M. IONESCU.** Chemistry and Technology of Polyols for Polyurethanes. Rapra Technology Limited, 2005, 336 ff
- **M. BAERNS ; A. BEHR ; A. BREHM ; J. GMEHLING ; H. HOFMANN ; U. ONKEN.** Ullmann's Encyclopedia of Industrial Chemistry. vol. A21, 665
- **M. ZLOKARNIK.** technik, Theorie und Praxis. Springer Verlag, 1999